# EUROPEAN PATENT SPECIFICATION

(11) **EP 3 981 246 B1**
(45) Date of publication and mention of the grant of the patent: **30.07.2025**
(21) Application number: 21180280.6
(22) Date of filing: 18.06.2021
(51) Int. Cl.: A01G 3/037

(54) **ELECTRIC SHEARS FOR PRUNING AND CUTTING IN GENERAL**
ELEKTRISCHE SCHERE ZUM BESCHNEIDEN UND SCHNEIDEN IM ALLGEMEINEN
CISAILLE ÉLECTRIQUE POUR LA TAILLE ET LA COUPE EN GÉNÉRAL

(30) Priority: 08.10.2020 IT 202000023701
(43) Date of publication of application: 13.04.2022
(73) Proprietor: Campagnola S.R.L., 40069 Zola Predosa (Bologna) (IT)
(72) Inventor: ARMAROLI, Andrea, 40134 Bologna (IT)
(74) Representative: Modiano, Micaela Nadia

(56) References cited:
- EP-A1- 2 156 732
- EP-A1- 3 141 356
- US-B2- 8 813 370
- US-B2- 9 872 440

## Description

The present invention relates to electric shears for pruning and cutting in general.

The use of electrically-actuated shears in agriculture and gardening is known. In these sectors, situations occur (periodically) in which it is necessary to prune many branches and shoots or cut a plurality of stems.

In particular, at the end of the summer season fruit plants need to be pruned in order to prepare them for winter and for the future spring season. Similar requirements occur at grape-harvest time (when it is necessary to cut the shoots in order to harvest the grapes).

Electric shears offer the advantage of reducing the efforts of the operators, which are particularly onerous if it is necessary to cut very thick branches and if these operations last for a long time.

The aperture of the blades of electric shears is normally adjustable, in order to adapt said aperture to the specific requirements of use (if one needs to work only on thin branches, it is preferable to provide a more limited blade aperture, whereas having a larger blade aperture may be convenient when working on large branches).

The transition from a first open configuration to a second open configuration is normally obtained by virtue of a selector switch optionally installed on auxiliary components (which the operator can, for example, wear by means of a shoulder strap or harnesses or backpacks and the like).

In practice, the operator must act on the selector switch each time it is necessary to modify the maximum aperture allowed for the blades of the electric shears in use.

This mode of operation is very awkward, since often the auxiliary component that accommodates the selector switch is located on the back of the operator or, in general, in positions that are difficult for the operator to access while using the shears.

Furthermore, the operator holds the shears with his more capable hand (the right one for right-handed people and the left one for left-handed people) and therefore may find it awkward to operate the selector switch with the other hand: to overcome this problem the operator will have to pass the shears to the other hand and act on the selector switch with the more capable hand.

It is evident that the mode for transitioning from one aperture of the blades to another that has been described so far is inconvenient and involves a significant delay of the operations in progress.

Some shears are known which have additional buttons on the handle; pressing allows the operator to transition from one open configuration of the blades to another.

In this case also, however, actuation is awkward (the buttons are in fact in positions that do not interfere with the normal use of the shears, in order to avoid accidental contact, and require the application of prolonged pressing actions for the corresponding activation).

It is therefore still necessary for the operator to stop the pruning and/or cutting operations, modify the grip of the shears and act on the buttons, with consequent waste of time. The frequency with which the need to transition from one aperture of the blades to another occurs can be high, and in these cases the use of buttons causes significant productivity losses.

In general, the use of buttons and selector switches on devices for heavy use (such as those in the fields of agriculture, gardening and the like) entails the introduction of components that are not strictly necessary and may break and therefore are not particularly well accepted by the operators of the field.

US 9 872 440 B2 discloses electric shears of the related art.

The aim of the present invention is to solve the problems described above, proposing electric shears for pruning and cutting in general which allow an operator to transition quickly from one open configuration of the blades to another.

Within this aim, an object of the invention is to propose electric shears for pruning and cutting in general which make it possible to transition from one open configuration of the blades to another without the need to modify the grip of the corresponding handle by the operator.

Another object of the invention is to propose electric shears for pruning and cutting in general which are constituted by a minimal number of components and therefore are particularly tough and scarcely prone to malfunctions.

A further object of the present invention is to provide electric shears for pruning and cutting in general that have low costs and are relatively easy to provide in practice and of assured application.

This aim and these and other objects which will become better apparent hereinafter are achieved by electric shears for pruning and cutting in general according to independent claim 1.

Further characteristics and advantages of the invention will become more apparent from the description of a preferred but not exclusive embodiment, of the electric shears for pruning and cutting in general according to the invention, illustrated by way of non-limiting example in the accompanying drawings, wherein:

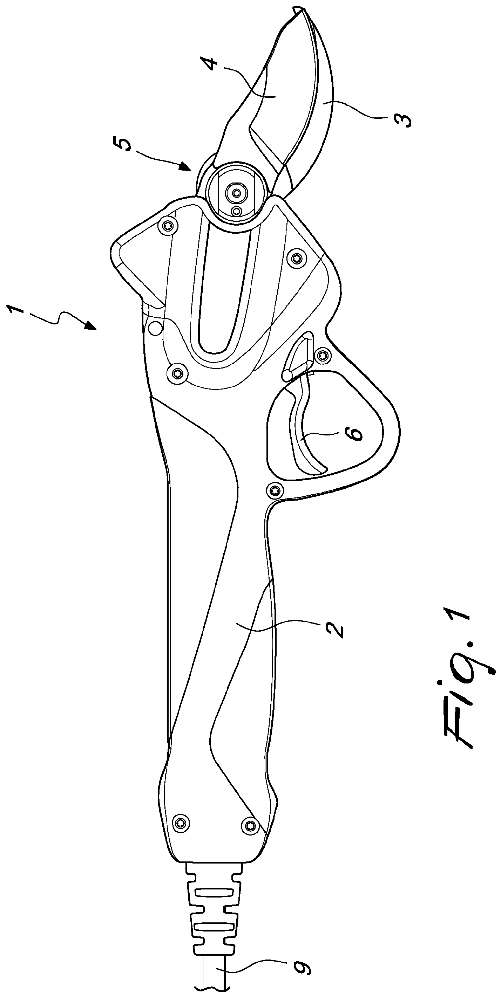

Figure 1 is a schematic side view of electric shears for pruning and cutting in general according to the invention;

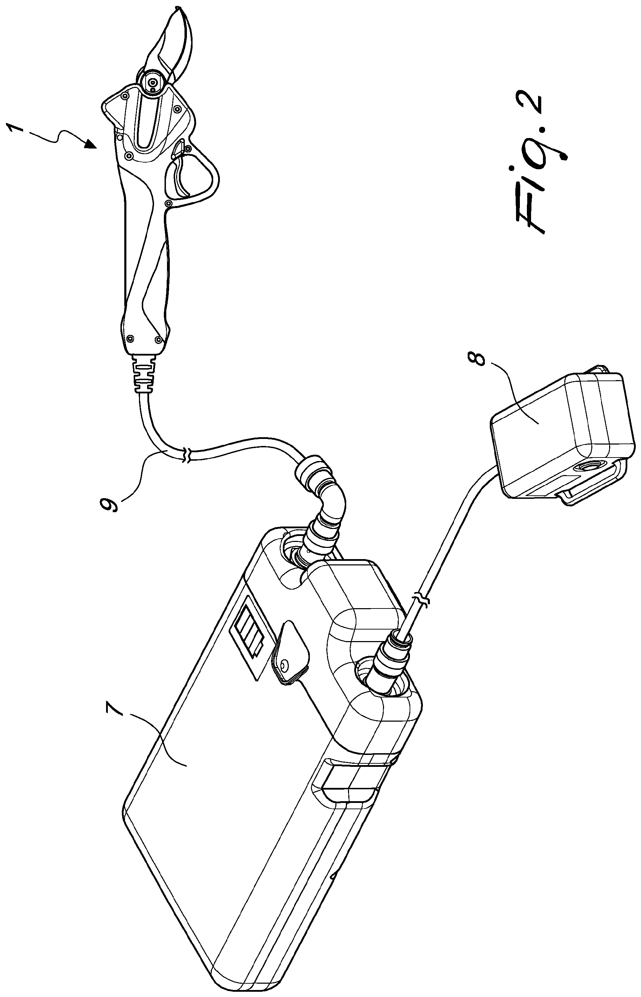

Figure 2 is a schematic perspective view of the electric shears of Figure 1 associated with a respective power supply battery storage unit;

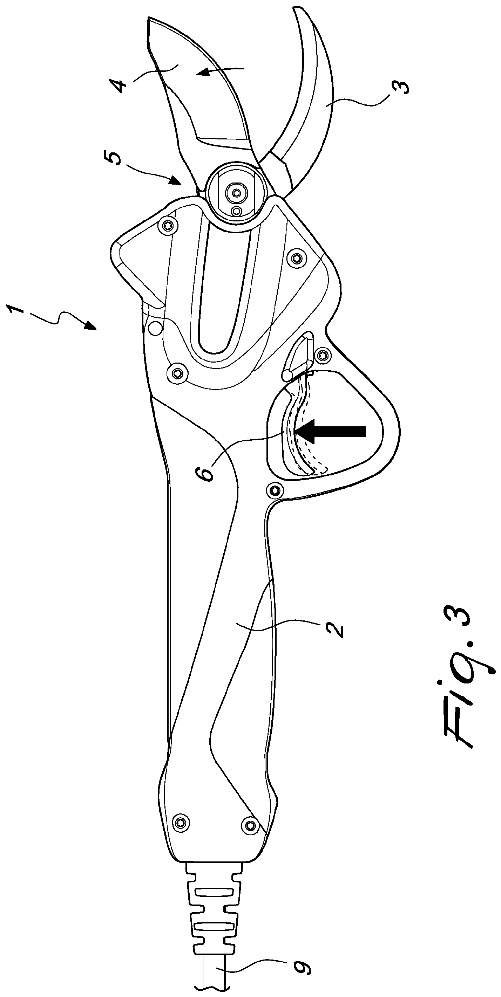

Figure 3 is a schematic side view of the electric shears of Figure 1 in a first step of variation of the aperture of the blades in an inactive configuration;

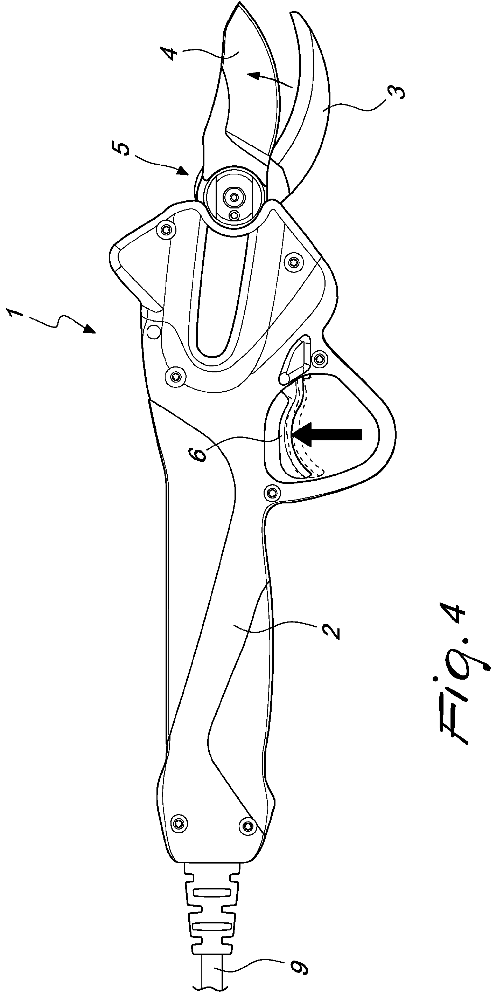

Figure 4 is a schematic side view of the electric shears of Figure 1 in an additional step of variation of the aperture of the blades in the inactive configuration.

With reference to the figures, electric shears for pruning and cutting in general are generally designated by the reference numeral 1.

The electric shears 1 comprise a box-like body 2, which is provided with a motor (accommodated inside it) for the actuation of at least one pair of blades 3, 4 which are pivoted at a respective end 5 and are actuated by means of a trigger lever 6.

The motor is electrically powered by a respective battery storage unit 7.

Furthermore, it is possible to connect to the battery storage unit 7 a control and signaling unit 8, which the operator can wear in a region that is easily visible during use in order to have available various types of information (for example, residual charge, mode of operation, any indications of faults or malfunctions and the like).

The shears 1 comprise a control and management unit, connected to the trigger lever 6 and to the motor, which is configured to detect the duration of the pressing action applied by the user to said lever 6 and to vary the aperture angle formed between the blades 3, 4.

The unit is preferably accommodated inside the box-like body 2 and is part of the electric circuit designed for the operation of the shears 1 according to the invention.

It is specified that the definition "aperture of the blades 3, 4" is understood to mean the breadth of the angle defined between them in the inactive configuration of the shears 1, i.e., when the shears 1 are inactive and the blades 3, 4 are not overlapping and/or are not moving to overlap to perform a cutting and/or trimming operation (in practice, the inactive configuration occurs when the electric motor that actuates the blades is not moving).

The control and management unit, upon a pressing action of the pulse type applied to the lever 6, causes advantageously the transition from an initial open configuration of the blades 3, 4, which corresponds to a predefined angle, to a different open configuration of the blades 3, 4, which corresponds to an additional predefined angle.

In practice, therefore, it is possible, by the application of a pulse-type pressing action to the trigger lever 6, to modify the open configuration of the blades 3, 4 when they are in the inactive configuration, adapting said aperture to the thickness of the branches and/or, in general, of the portions to be cut.

Likewise, the unit, upon a pressing action of the prolonged type applied to the lever 6, causes positively a rotation of the blades 3, 4 in a configuration of at least partial overlap to cut a branch, a stem, and in general a part of a plant.

With particular reference to a constructive solution of unquestionable interest in practice and in application, it is specified that the control and management unit may conveniently be a microprocessor of the programmable type, installed inside the box-like body 2.

Furthermore, it is specified that the open configurations of the blades 3, 4 may usefully be at least two: a first configuration defines a first maximum aperture angle of the blades 3, 4, and a second configuration defines a second minimum aperture angle of the blades 3, 4.

Moreover, the possibility is provided that the shears 1 according to the invention may comprise at least one third configuration which defines at least one third angle that is intermediate with respect to the first angle and the second angle.

In this manner, the shears 1 according to the invention are constructed to be particularly versatile, since they can be adapted easily to the thickness of any part to be cut, simply by transitioning from one open configuration of the blades 3, 4 to another, without the need for the operator to change the grip of the handle (and therefore maintaining the arrangement for normal use, to the full benefit of the swiftness of the modifications and of the consequent productivity).

From an operating point of view, it is specified that the control and management unit, upon a first pressing action of the pulse type of the trigger lever 6, causes the transition from the first aperture angle to the second aperture angle.

With such aperture angle it is possible to perform the subsequent cutting operation, at the end of which the first initial aperture angle will again be assumed.

A constructive solution is not excluded in which, upon a second pressing action of the pulse type of the trigger lever, transition from the second aperture angle to the first aperture angle is caused if only two distinct open configurations of the blades 3, 4 (when inactive) are provided (programmed) in said control and management unit.

If, instead, multiple open configurations of the blades 3, 4 (when inactive) are provided (programmed), the control and management unit, upon a first pressing action of the pulse type of the trigger lever 6, causes the transition from the first aperture angle to a subsequent aperture angle and, upon additional pressing actions of the pulse type of the trigger lever, causes transition from the subsequent aperture angle, progressively, to all the stored possible aperture angles, until the first aperture angle is restored after a preset number of pressing actions of the pulse type that are applied.

Furthermore, it is specified that from a constructive standpoint, a connecting cable 9 is interposed between the box-like body 2 and the battery storage unit 7.

The battery storage unit 7 may favorably comprise respective elements for fixing to the body of the user: in particular, the use of harnesses, shoulder straps, retention buckles which allow the user to "wear" the battery storage unit 7 in order to carry it without any effort during the use of the shears 1 is provided.

It is specified that the box-like body 2 instead can be gripped by the user so that with one of his fingers (generally the index) he can apply the pressing action to the trigger lever 6.

In order to provide guideline indications on the type of pressing actions that may be exerted on the trigger lever 6 by the user, the pressing actions on the trigger lever 6 of the pulse type have a duration of less than 0.5 seconds, while the pressing actions of the prolonged type exerted on the trigger lever 6 will have a duration of more than 0.5 seconds.

In general, the prolonged pressing action lasts for as long as it takes to cut the part of the plant and therefore it may be necessary to maintain it even for a few seconds.

The scope of protection of the present invention extends also to a method for the control and management of the maximum angular aperture of the blades 3, 4 in electric shears 1 according to independent claim 9.

The method provides for a step in which it is necessary to apply prolonged pressing actions to the trigger lever 6, by means of the finger of the user, for the actuation of shears 1 with consequent closure of the blades 3, 4 on the plant portion to be cut.

In addition, a further step is provided in which it is necessary to apply pulse-type pressing actions to the trigger lever 6, by means of the finger of the user: each pressing action causes the switching of the inactive configuration of the shears 1 from an initial aperture angle of the blades 3, 4 to a different aperture angle thereof.

From a practical standpoint, it is shown that the pulse-type pressing actions will be applied to the trigger lever 6 by making the finger slide on the trigger lever 6 until it separates from the lever 6 and the lever 6 automatically returns to the inactive position due to elastic elements associated therewith.

It should be pointed out that the operator, by exerting a pulse-type pressing action on the trigger lever 6, imposes a different aperture angle of the blades 3, 4 in an inactive condition with respect to an initial angle.

When the different open configuration of the blades 3, 4 in an inactive condition has been reached, if the operator exerts a subsequent prolonged pressing action on the trigger lever 6 he actuates the shears 1 with consequent closure of the blades 3, 4 on the portion of the plant to be cut, until it is cut.

After the complete closure of the blades 3, 4 (their at least partial overlap which ensures the cutting of the plant portion on which they operate), a subsequent reopening of said blades 3, 4 occurs according to the initial angle, assumed in their inactive configuration.

In this manner, the modification of the aperture angle of the blades 3, 4 is not permanent, enabling the operator, who can calibrate the aperture of the blades 3, 4 to an ideal value for the type of operations he has to perform (pruning, grape-harvesting, stem cutting...), but can change said angle upon particular conditions that he might detect during use of the shears 1. The automatic reset of the initial angle allows the operator to use the shears 1 with the ideal aperture angle initially selected by him, without having to perform additional operations (pulse-type pressing actions on the trigger lever 6) in order to modify said angle.

It is not excluded that the management software of the shears 1 might alternatively allow the permanent setting of a new aperture angle of the blades 3, 4 (in this case the transition from a first aperture angle to other and different aperture angles is entrusted to the operator, who will have to exert further pulse-type pressing actions on the trigger lever 6).

Advantageously, the present invention solves the problems described above, proposing electric shears 1 for pruning and cutting in general that make it possible to transition from one open configuration of the blades 3, 4 to another in a quick manner.

Positively, the electric shears 1 according to the invention allow the operator to transition from one open configuration of the blades 3, 4 to another without the need to modify the grip of the corresponding handle by the operator.

Conveniently, the electric shears 1 according to the invention are constituted by a minimal number of components and therefore are particularly tough and scarcely prone to malfunctions.

Validly, the electric shears 1 according to the invention are relatively simple to provide and have low costs: these characteristics make the shears 1 according to the invention an innovation of assured application.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Electric shears for pruning and cutting in general, of the type comprising a box-like body (2) provided with a motor for the actuation of a pair of blades (3, 4) which are pivoted at a respective end (5) and are actuated by means of a trigger lever (6), said motor being electrically powered by a respective battery storage unit (7), wherein the electric shears comprises a control and management unit, connected to said trigger lever (6) and to said motor, configured to detect a duration of a pressing action applied by a user to said trigger lever (6) and to vary an aperture angle formed between said blades (3, 4), said control and management unit, upon a pressing action of the pulse type applied to said trigger lever (6), causing a transition from an initial open configuration of said blades (3, 4), which corresponds to a predefined angle, to a different open configuration of said blades (3, 4), which corresponds to an additional predefined angle, **characterized in that** upon a pressing action of the prolonged type applied to said trigger lever (6), the control and management unit causes a closure of the blades (3, 4) to cut a branch, a stem, and in general a part of a plant with subsequent reopening of said blades (3, 4) to said initial open configuration .

2. The electric shears according to claim 1, **characterized in that** said control and management unit is a microprocessor of the programmable type, installed inside said box-like body (2).

3. The electric shears according to claim 1, **characterized in that** said open configurations of said blades (3, 4) are at least two, a first configuration defining a first maximum aperture angle of said blades (3, 4), a second configuration defining a second minimum aperture angle of said blades (3, 4).

4. The electric shears according to claim 1, **characterized in that** they comprise at least one third configuration which defines at least one third angle that is intermediate with respect to said first angle and said second angle.

5. The electric shears according to claim 3, **characterized in that** said control and management unit, upon a first pressing action of the pulse type of said trigger lever (6), causes the transition from said first aperture angle to said second aperture angle and, upon a second pressing action of the pulse type of said trigger lever (6), causes the transition from said second aperture angle to said first aperture angle.

6. The electric shears according to claim 4, **characterized in that** said control and management unit, upon a first pressing action of the pulse type of said trigger lever (6), causes the transition from said first aperture angle to a subsequent aperture angle and, upon additional pressing actions of the pulse type of said trigger lever (6), causes the transition from said subsequent aperture angle, progressively, to all the stored possible aperture angles, until said first aperture angle is restored after a preset number of pressing actions of the pulse type applied by the user.

7. The electric shears according to one or more of the preceding claims, **characterized in that** a connecting cable (9) is interposed between said box-like body (2) and said battery storage unit (7), said battery storage unit (7) comprising respective elements for fixing to the body of the user and said box-like body (2) being handholdable by said user.

8. The electric shears according to one or more of the preceding claims, **characterized in that** said pressing actions on said trigger lever (6) of the pulse type have a duration of less than 0.5 seconds and said pressing actions on said trigger lever (6) of the prolonged type have a duration of more than 0.5 seconds.

9. A method for the control and management of a maximum angular aperture of blades (3, 4) in electric shears (1), which consists in
- applying prolonged pressing actions to a trigger lever (6), by means of a finger of a user, for the actuation of said shears (2) with consequent closure of the blades (3, 4) on a plant portion to be cut;
- applying pulse-type pressing actions to the trigger lever (6), by means of the finger of the user, each pressing action causing a switching of an inactive configuration of said shears (1) from an initial aperture angle of said blades (3, 4) to a different aperture angle thereof wherein after applying a pulse-type pressing action to the trigger lever (6), imposing a different inactive aperture angle of said blades (3, 4) with respect to an initial angle, a subsequent prolonged pressing action on the trigger lever (6) causes an actuation of said shears (2) with consequent closure of the blades (3, 4) on the plant portion to be cut, until it is cut with subsequent reopening of said blades (3, 4) according to said initial angle, in the inactive configuration.

10. The method according to claim 9, **characterized in that** said pulse-type pressing actions are applied to said trigger lever (6) by making the finger slide on said trigger lever (6) until it separates from said lever (6) and until said lever (6) automatically returns to the inactive position due to elastic elements associated therewith.

## Patentansprüche

1. Elektrische Schere zum Beschneiden und Schneiden im Allgemeinen, von der Art, die einen kastenartigen Körper (2) umfasst, ausgestattet mit einem Motor zum Antreiben eines Paares von Klingen (3, 4), die an einem entsprechenden Ende (5) drehgelenkig angebracht sind und mit Hilfe eines Auslösehebels (6) betätigt werden; wobei der Motor von einer entsprechenden Batterie-Speichereinheit (7) mit Strom versorgt wird; wobei die elektrische Schere eine Steuerungs- und Verwaltungseinheit umfasst, verbunden mit dem Auslösehebel (6) und mit dem Motor, ausgebildet, um eine Dauer eines Pressvorgangs zu erfassen, der von einem Benutzer auf den Auslösehebel (6) ausgeübt wird, und einen Öffnungswinkel zu verändern, der zwischen den Klingen (3, 4) gebildet ist; wobei die Steuerungs- und Verwaltungseinheit nach einem Pressvorgang vom Pulstyp, der auf den Auslösehebel (6) ausgeübt wird, einen Übergang aus einer offenen Ausgangskonfiguration der Klingen (3, 4), die einem vordefinierten Winkel entspricht, in eine andere offene Konfiguration der Klingen (3, 4) auslöst, die einem weiteren vordefinierten Winkel entspricht; **dadurch gekennzeichnet, dass** nach einem Pressvorgang des verlängerten Typs, der auf den Auslösehebel (6) ausgeübt wird, die Steuerungs- und Verwaltungseinheit ein Schließen der Klingen (3, 4) veranlasst, um einen Zweig, einen Stamm und allgemein einen Teil einer Pflanze zu schneiden, mit anschließendem erneutem Öffnen der Klingen (3, 4) in die offene Ausgangskonfiguration.

2. Die elektrische Schere gemäß Anspruch 1, **dadurch gekennzeichnet, dass** die Steuerungs- und Verwaltungseinheit ein Mikroprozessor vom programmierbaren Typ, installiert in dem kastenartigen Körper (2), ist.

3. Die elektrische Schere gemäß Anspruch 1, **dadurch gekennzeichnet, dass** die offenen Konfigurationen der Klingen (3, 4) mindestens zwei an der Zahl sind, eine erste Konfiguration, die einen ersten, maximalen Öffnungswinkel der Klingen (3, 4) bestimmt, und eine zweite Konfiguration, die einen zweiten, minimalen Öffnungswinkel der Klingen (3, 4) bestimmt.

4. Die elektrische Schere gemäß Anspruch 1, **dadurch gekennzeichnet, dass** sie mindestens eine dritte Konfiguration umfasst, die mindestens einen dritten Winkel bestimmt, welcher zwischen dem ersten und dem zweiten Winkel liegt.

5. Die elektrische Schere gemäß Anspruch 3, **dadurch gekennzeichnet, dass** die Steuerungs- und Verwaltungseinheit nach einem ersten Pressvorgang vom Pulstyp, der auf den Auslösehebel (6) ausgeübt wird, den Übergang aus dem ersten Öffnungswinkel in den zweiten Öffnungswinkel auslöst und nach einem zweiten Pressvorgang vom Pulstyp, der auf den Auslösehebel (6) ausgeübt wird, den Übergang aus dem zweiten Öffnungswinkel in den ersten Öffnungswinkel auslöst.

6. Die elektrische Schere gemäß Anspruch 4, **dadurch gekennzeichnet, dass** die Steuerungs- und Verwaltungseinheit nach einem ersten Pressvorgang vom Pulstyp, der auf den Auslösehebel (6) ausgeübt wird, den Übergang aus dem ersten Öffnungswinkel in einen darauf folgenden Öffnungswinkel auslöst und nach weiteren Pressvorgängen vom Pulstyp, die auf den Auslösehebel (6) ausgeübt werden, schrittweise den Übergang aus dem darauf folgenden Öffnungswinkel in alle möglichen gespeicherten Öffnungswinkel auslöst, bis der erste Öffnungswinkel nach einer vordefinierten Anzahl von Pressvorgängen vom Pulstyp, die vom Benutzer ausgeübt werden, wiederhergestellt ist.

7. Die elektrische Schere gemäß einem oder mehreren der obigen Ansprüche, **dadurch gekennzeichnet, dass** ein Verbindungskabel (9) zwischen dem kastenartigen Körper (2) und der Batterie-Speichereinheit (7) angeordnet ist, wobei die Batterie-Speichereinheit (7) entsprechende Elemente zur Befestigung am Körper des Benutzers umfasst und der kastenartige Körper (2) von dem Benutzer in der Hand gehalten werden kann.

8. Die elektrische Schere gemäß einem oder mehreren der obigen Ansprüche, **dadurch gekennzeichnet, dass** die Pressvorgänge vom Pulstyp, die auf den Auslösehebel (6) ausgeübt werden, eine Dauer von weniger als 0,5 Sekunden haben und die Pressvorgänge vom verlängerten Typ, die auf den Auslösehebel (6) ausgeübt werden, eine Dauer von mehr als 0,5 Sekunden haben.

9. Ein Verfahren zur Steuerung und Verwaltung einer maximalen Winkelöffnung von Klingen (3, 4) einer elektrischen Schere (1), das in Folgendem besteht:
- dem Ausüben verlängerter Pressvorgänge auf einen Auslösehebel (6) mit Hilfe eines Fingers eines Benutzers zum Antreiben der Schere (2) mit daraus folgendem Schließen der Klingen (3, 4) um einen zu schneidenden Pflanzenteil;
- dem Ausüben von Pressvorgängen vom Pulstyp auf den Auslösehebel (6) mit Hilfe des Fingers des Benutzers, wobei jeder Pressvorgang ein Umschalten einer inaktiven Konfiguration der Schere (1) aus einem ursprünglichen Öffnungswinkel der Klingen (3, 4) in einen anderen Öffnungswinkel derselben auslöst; wobei, nach dem Ausüben eines Pressvorgangs vom Pulstyp auf den Auslösehebel (6), wodurch ein anderer, inaktiver Öffnungswinkel der Klingen (3, 4) eingestellt wird als ein Ausgangswinkel, ein darauf folgender verlängerter Pressvorgang auf den Auslösehebel (6) einen Antrieb der Schere (2) mit daraus folgendem Schließen der Klingen (3, 4) um den zu schneidenden Pflanzenteil auslöst, bis er geschnitten ist; mit anschließendem erneutem Öffnen der Klingen (3, 4) in dem Ausgangswinkel, in der inaktiven Konfiguration.

10. Das Verfahren gemäß Anspruch 9, **dadurch gekennzeichnet, dass** die Pressvorgänge vom Pulstyp auf den Auslösehebel (6) ausgeübt werden durch Gleitenlassen des Fingers auf dem Auslösehebel (6), bis er sich von dem Hebel (6) trennt und bis der Hebel (6) aufgrund der damit verbundenen elastischen Elemente automatisch in die inaktive Position zurückkehrt.

## Revendications

1. Cisailles électriques pour la taille et la coupe en général, du type comprenant un corps en forme de boîte (2) muni d'un moteur pour l'actionnement d'une paire de lames (3, 4) qui sont pivotées à une extrémité respective (5) et actionnées au moyen d'un levier de déclenchement (6), ledit moteur étant alimenté électriquement par une unité d'accumulation de batterie respective (7), où les cisailles électriques comprennent
une unité de commande et de gestion, reliée audit levier de déclenchement (6) et audit moteur, configurée pour détecter une durée d'action d'appui exercée par un utilisateur sur ledit levier de déclenchement (6) et pour faire varier un angle d'ouverture formé entre lesdites lames (3, 4), ladite unité de commande et de gestion, lors d'une action d'appui de type impulsionnel exercée sur ledit levier de déclenchement (6), provoquant une transition d'une configuration initiale ouverte desdites lames (3, 4), qui correspond à un angle prédéfini, à une configuration ouverte différente desdites lames (3, 4), qui correspond à un angle prédéfini supplémentaire, **caractérisée en ce que** lors d'une action d'appui de type prolongé appliquée audit levier de déclenchement (6), l'unité de commande et de gestion provoque une fermeture des lames (3, 4) pour couper une branche, une tige, et en général une partie d'une plante, avec réouverture ultérieure desdites lames (3, 4) dans ladite configuration ouverte initiale.

2. Cisailles électriques selon la revendication 1, **caractérisées en ce que** ladite unité de commande et de gestion est un microprocesseur de type programmable, installé à l'intérieur dudit corps en forme de boîte (2).

3. Cisailles électriques selon la revendication 1, **caractérisés en ce que** lesdites configurations ouvertes desdites lames (3, 4) sont au moins au nombre de deux, une première configuration définissant un premier angle d'ouverture maximal desdites lames (3, 4), une deuxième configuration définissant un deuxième angle d'ouverture minimal desdites lames (3, 4).

4. Cisailles électriques selon la revendication 1, **caractérisés en ce qu'**ils comprennent au moins une troisième configuration qui définit au moins un troisième angle intermédiaire par rapport audit premier angle et audit deuxième angle.

5. Cisailles électriques selon la revendication 3, **caractérisés en ce que** ladite unité de commande et de gestion, lors d'une première action d'appui de type impulsion de ledit levier de déclenchement (6), provoque le passage dudit premier angle d'ouverture audit deuxième angle d'ouverture et, lors d'une deuxième action de pression de type impulsion de ledit levier de déclenchement (6), provoque le passage dudit deuxième angle d'ouverture audit premier angle d'ouverture.

6. Cisailles électriques selon la revendication 4, **caractérisées en ce que** ladite unité de commande et de gestion, lors d'une première action d'appui de type impulsion de ledit levier de déclenchement (6), provoque le passage dudit premier angle d'ouverture à un angle d'ouverture suivant et, lors d'actions d'appui supplémentaires de type impulsionnel dudit levier de déclenchement (6), provoque le passage dudit angle d'ouverture suivant, progressivement, à tous les angles d'ouverture possibles mémorisés, jusqu'à ce que ledit premier angle d'ouverture soit rétabli après un nombre prédéfini d'actions d'appui de type impulsionnel appliquées par l'utilisateur.

7. Cisailles électriques selon une ou plusieurs des revendications précédentes, **caractérisés en ce qu'**un câble de connexion (9) est interposé entre ledit corps en forme de boîte (2) et ladite unité d'accumulation de batterie (7), ladite unité d'accumulation de batterie (7) comprenant des éléments respectifs pour la fixation au corps de l'utilisateur et ledit corps en forme de boîte (2) pouvant être tenu à la main par ledit utilisateur.

8. Cisailles électriques selon l'une ou plusieurs des revendications précédentes, **caractérisés en ce que** lesdites actions d'appui sur ledit levier de déclenchement (6) de type impulsion ont une durée inférieure à 0,5 seconde et lesdites actions d'appui sur ledit levier de déclenchement (6) de type prolongé ont une durée supérieure à 0,5 seconde.

9. Procédé de contrôle et de gestion d'une ouverture angulaire maximale de lames (3, 4) dans des cisailles électriques (1), qui consiste à
- appliquer des actions d'appui prolongées sur un levier de déclenchement (6), au moyen d'un doigt d'un utilisateur, pour l'actionnement desdites cisailles (2) avec fermeture consécutive des lames (3, 4) sur une partie de plante à couper,
- d'appliquer des actions de pression de type impulsionnel sur le levier de déclenchement (6), au moyen du doigt de l'utilisateur, chaque action de pression provoquant une commutation d'une configuration inactive desdites cisailles (1) d'un angle d'ouverture initial desdites lames (3, 4) à un angle d'ouverture différent de celles-ci, où, après avoir appliqué une action d'appui de type impulsionnel sur le levier de déclenchement (6), en imposant un angle d'ouverture inactif différent desdites lames (3, 4) par rapport à un angle initial, une action d'appui prolongée ultérieure sur le levier de déclenchement (6) provoque l'actionnement desdites cisailles (2) avec fermeture consécutive des lames (3, 4) sur la partie de la plante à couper, jusqu'à ce qu'elle soit coupée avec réouverture ultérieure desdites lames (3, 4) selon ledit angle initial, dans la configuration inactive.

10. Procédé selon la revendication 9, **caractérisé en ce que** lesdites actions d'appui de type impulsionnel sont appliquées audit levier de déclenchement (6) en faisant glisser le doigt sur ledit levier de déclenchement (6) jusqu'à ce qu'il se sépare dudit levier (6) et jusqu'à ce que ledit levier (6) revienne automatiquement à la position inactive grâce à des éléments élastiques qui lui sont associés.
